# EUROPEAN PATENT SPECIFICATION

(11) **EP 0 953 586 B1**
(45) Date of publication and mention of the grant of the patent: **24.03.2004**
(21) Application number: 98954494.5
(22) Date of filing: 18.11.1998
(51) Int. Cl.: C08G 18/42, C08G 63/02, C08G 63/08, C08G 63/78, C08G 63/664

(54) **POLYURETHANE CRYSTALLINE THERMOPLASTIC AND METHOD FOR THE PRODUCTION THEREOF**
THERMOPLASTISCHES KRISTALLINPOLYURETHAN UND VERFAHREN ZU DEREN HERSTELLUNG
PRODUIT THERMOPLASTIQUE DE POLYURETHANE CRISTALLIN ET PROCEDE DE FABRICATION DE CE PRODUIT

(30) Priority: 20.11.1997 ES 9702425
(43) Date of publication of application: 03.11.1999
(73) Proprietor: Merquinsa Mercados Quimicos, S.L., 08160 Montmelo (ES)
(72) Inventor: JULIA BARGES, Joaquim, E-08328 Alella (ES); AYUSO PIQUERAS, José Luis, E-08017 Barcelona (ES)
(74) Representative: Primo de Rivera y Urquijo, Jose Antonio
(86) International application number: PCT/ES1998/000313
(87) International publication number: WO 1999/026993

(56) References cited:
- EP-A- 0 492 824
- DE-A- 19 519 391
- US-A- 4 098 747

## Description

The invention relates to a crystalline polyurethane thermoplastic material having the general formula I 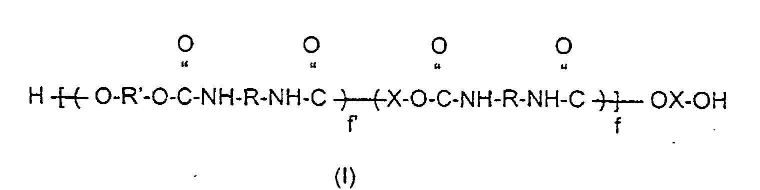 where f is an integer ranging from 1 to 58; f' is an integer ranging from 0 to 58; R and R' are the same or different and stand for alkyl or aryl groups and X is a polycaprolactone block polymer, having a molecular weight ranging from 500 to 25,000 and having formula II 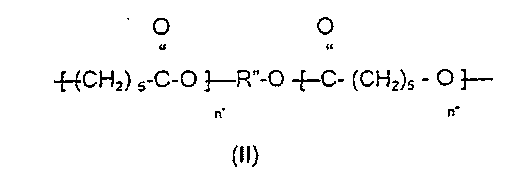 where R" is an alkyl or aryl group, and n' and n" are integers the sum of which ranges from 42 to 220.

This polyurethane is particularly useful in thermobonding and hot melt applications in the industrial markets, above all for footwear, wood and automotion.

The polyurethane thermoplastic materials of the present invention have the advantage over all the known polyurethane thermoplastic materials of being very crystalline, with good physico-chemical and mechanical properties, and at the same time very thermoplastic, with softening points of 60-70°C and very soluble in all the regularly used solvents. They are also very easily presentable in microbead form or convertible into powders.

The invention also relates to a method of preparing the said compound. This method is characterised in that it comprises reacting a polycaprolactone polymer of relatively high molecular weight 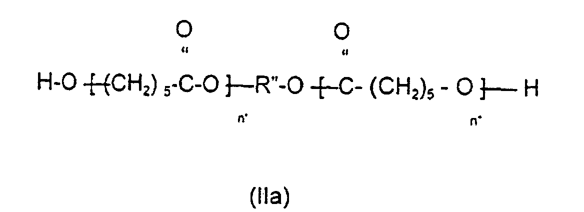 with a diisocyanate of formula OCN-R-NCO and optionally with a chain extender of formula HO-R'-OH, where R and R' have the same meaning as indicated hereinbefore. Said extender is preferably 1,4-butanediol and said diisocyanate is diphenylmethane 4,4'-diisocyanate, toluene 2,4- and 2,6-diisocyanate, dicyclo hexylmethane 4,4'-diisocyanate or 3-isocyanomethyl-3,5,5-trimethylcyclohexyl isocyanate.

The reaction is also preferably conducted by mixing equimolecular amounts of diisocyanate with the formula II polycaprolactone polymer.

It is contemplated that mixing be continuous with a flow rate ranging from 200 to 1200 kg/h of total component weight, in an extruder, at a temperature ranging from 150° to 350°C and with a mean dwell time ranging from 45 seconds to 2.5 minutes.

The reaction is preferably conducted in the presence of metal complex based catalysts proper to urethane reactions, particularly tin and/or bismuth derivatives.

### EXAMPLE 1

### Preparation of a crystalline polyurethane thermoplastic material

87.0 kg of 2,4; 2,6 toluene diisocyanate and 5,000 kg of the polycaprolactone polymer were used. These products were mixed in a continuous process at a rate of 600 kg/h in a double screw extruder of a form proper to a reactor, at a temperature held to between 200° and 300°C and with a mean dwell time ranging from 1.5 to 2.0 minutes.

On exiting from the extruder, the product was cut, cooled and formed into beads, was dried and packaged under standard temperature and humidity conditions. An amount of 100 ppm of metal complex catalysts was used in the process.

### EXAMPLE 2

### Preparation of a crystalline polyurethane thermoplastic material

250 kg of 4,4'-diphenyl-methane diisocyanate and 10,000 kg of the polycaprolactone polymer were used. These products were mixed in a continuous process at a rate of 600 kg/h in a double screw extruder of a form proper to a reactor, at a temperature held to between 200° and 300°C and with a mean dwell time ranging from 1.5 to 2.0 minutes.

On exiting from the extruder, the product was cut, cooled and formed into beads, was dried and packaged under standard temperature and humidity conditions. An amount of 100 ppm of metal complex catalysts was used in the process.

## Claims

1. A crystalline polyurethane thermoplastic material having the general formula I 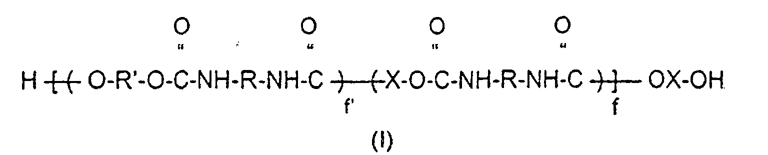 where f is an integer ranging from 1 to 58; f is an integer ranging from 0 to 58; R and R' are the same or different and stand for alkyl or aryl groups and X has the formula II 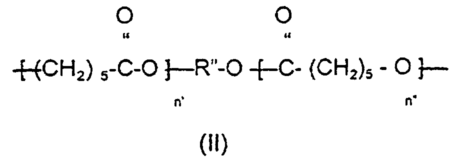 where R" is an alkyl or aryl group, and n' and n" are integers the sum of which ranges from 42 to 220.

2. A method for the preparation of a crystalline polyurethane thermoplastic material of general formula I, 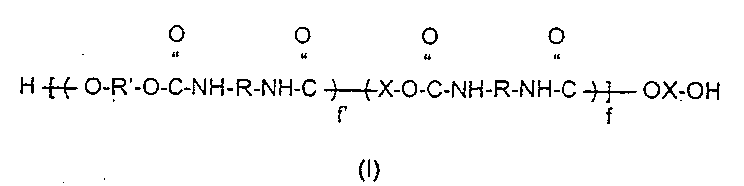 where f is an integer ranging from 1 to 58; f' is an integer ranging from 0 to 58; R and R' are the same or different and stand for alkyl or aryl groups and X has formula II 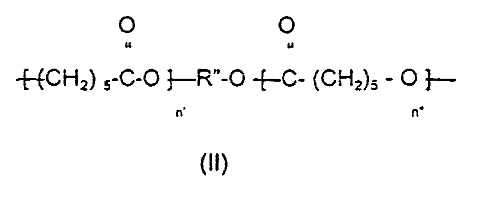 where R" is an alkyl or aryl group, and n' and n" are integers the sum of which ranges from 42 to 220, **characterised in that** it comprises reacting a polycaprolactone polymer of formula IIa 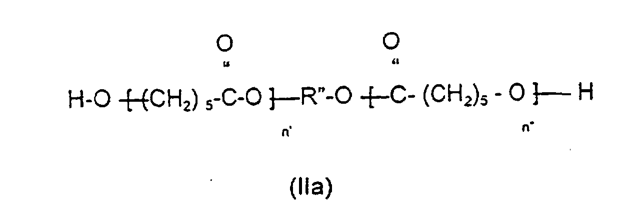 where R", n' and n" have the meaning given hereinbefore, with a diisocyanate of formula OCN-R-NCO where R and R' have the meaning given hereinbefore.

3. The method according to claim 2, **characterised in that** a chain extender of formula HO-R'-OH is used in said reaction between the polycaprolactone polymer of formula IIa and said diisocyanate.

4. The method according to claim 3, **characterised in that** said extender is 1,4-butanediol.

5. The method according to at least one of claims 2 to 4, **characterised in that** said diisocyanate is diphenylmethane 4,4'-diisocyanate, toluene 2,4- and 2,6-diisocyanate, dicyclo hexylmethane 4,4'-diisocyanate or 3-isocyanomethyl-3,5,5-trimethylcyclohexyl isocyanate.

6. The method according to one of claims 2 to 5, **characterised in that** said reaction is conducted by mixing equimolecular amounts of diisocyanate with said chain extender and said polycaprolactone polymer of formula II, said last two compounds being present at a molar rate ranging from 0/1 to 1/1 respectively.

7. The method according to claim 6, **characterised in that** the mixing is continuous with a flow rate ranging from 200 to 1200 kg/h of total component weight, and is performed in an extruder, at a temperature ranging from 150° to 350°C and with a mean dwell time ranging from 45 seconds to 2.5 minutes.

8. The method according to one of claims 2 to 7, **characterised in that** said reaction is conducted in the presence of metal complex based catalysts proper to urethane reactions.

9. The method according to claim 8, **characterised in that** said metals are tin and/or bismuth.

10. The method according to one of claims 2 to 9, **characterised in that** said polycaprolactone polymer of formula IIa 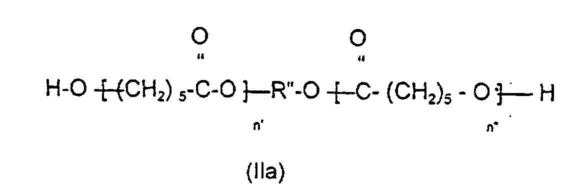 where R", n' and n" have the meaning given hereinbefore, has a molecular weight ranging from 5,000 to 25,000.

## Patentansprüche

1. Thermoplastisches Material aus kristallinem Polyurethan der allgemeinen Formel I 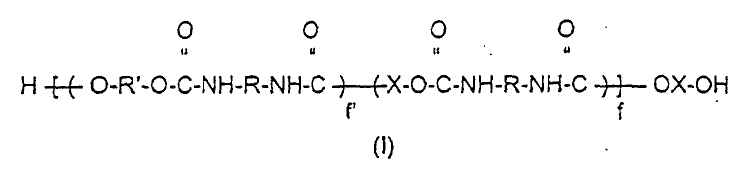 worin f eine ganze Zahl von 1 bis 58 ist; f' eine ganze Zahl von 0 bis 58 ist; R und R' gleich oder verschieden sind und Alkyl- oder Arylgruppen bedeuten und X die Formel II entspricht 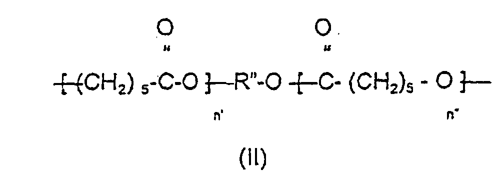 worin R" eine Alkyl- oder Arylgruppe ist, und n' und n" ganze Zahlen sind, deren Summe eine Zahl von 42 bis 220 ergibt.

2. Methode zur Herstellung eines termoplastischen Materials aus kristallinem Polyurethan der allgemeinen Formel I, 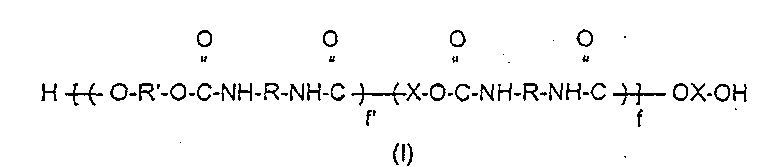 worin f eine ganze Zahl von 1 bis 58 ist; f' eine ganze Zahl von 0 is 58 ist; R und R' gleich oder verschieden sind und Alkyl- oder Arylgruppen bedeuten und X die Formel II entspricht 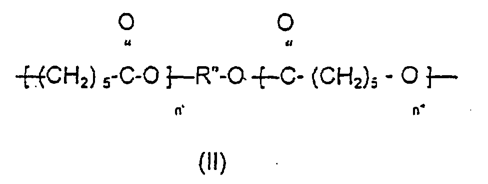 worin R" eine Alkyl- oder Arylgruppe ist, und n' und n" ganze Zahlen sind, deren Summe eine Zahl von 42 bis 220 ergibt, **dadurch gekennzeichnet, dass** sie die Reaktion eines Polycaprolactonpolymers der Formel IIa 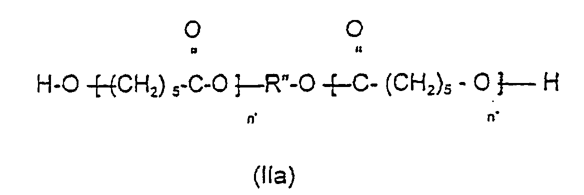 worin R", n' und n" die vorstehend angegebenen Bedeutungen besitzen, mit einem Diisocyanat der Formel OCN-R-NCO, wobei R und R' die vorstehend angegebenen Bedeutungen besitzen, umfasst.

3. Methode nach Anspruch 2, **dadurch gekennzeichnet, dass** ein Kettenverlängerungsmittel der Formel HO-R'-OH in der besagten Reaktion zwischen dem Polycaprolactonpolymer der Formel IIa und dem besagten Diisocyanat eingesetzt wird.

4. Methode nach Anspruch 3, **dadurch gekennzeichnet, dass** das besagte Verlängerungsmittel 1,4-butandiol ist.

5. Methode nach mindestens einem der Ansprüche 2 bis 4, **dadurch gekennzeichnet, dass** das besagte Diisocyanat Diphenylmethan-4,4'-diisocyanat, 2,4-und 2,6-Toluol-diisocyanat, 4,4'-Diisocyanatodicyclohexylmethan oder 3-Isocyanomethyl-3,5,5-trimethylcyclohexyl Isocyanat ist.

6. Methode nach einem der Ansprüche 2 bis 5, **dadurch gekennzeichnet, dass** die besagte Reaktion durchgeführt wird, indem man äquimolare Mengen des Diisocyanats mit dem besagten Kettenverlängerungsmittel und dem besagten Polycaprolactonpolymer der Formel II mischt, wobei die letzten beiden Komponenten jeweils in einem Molekularverhältnis von 0/1 bis 1/1 vorhanden sind.

7. Methode nach Anspruch 6, **dadurch gekennzeichnet, dass** das Mischen kontinuierlich, mit einer Strömungsgeschwindigkeit von 200 bis 1200 kg/h des Gesamtgewichtes der Komponente, und in einem Extruder bei einer Temperatur von 150 bis 350°C und mit einer Verweilzeit von 45 Sekunden bis 2,5 Minuten erfolgt.

8. Methode nach einem der Ansprüche 2 bis 7, **dadurch gekennzeichnet, dass** die besagte Reaktion in Anwesenheit eines auf einem Metallkomplex basierenden für Urethanreaktionen geeigneten Katalysators durchgeführt wird.

9. Methode nach Anspruch 8, **dadurch gekennzeichnet, dass** die besagten Metalle Zinn oder Wismut sind.

10. Methode nach einem der Ansprüche 2 bis 9, **dadurch gekennzeichnet, dass** das besagte Polycaprolactonpolymer der Formel IIa 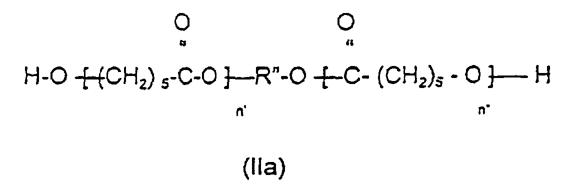 wobei R", n' und n" die vorstehend angegebenen Bedeutungen besitzen, einen Molekulargewicht von 5000 bis 25000 aufweist.

## Revendications

1. Matériel thermoplastique de polyuréthane cristallin de formule générale I 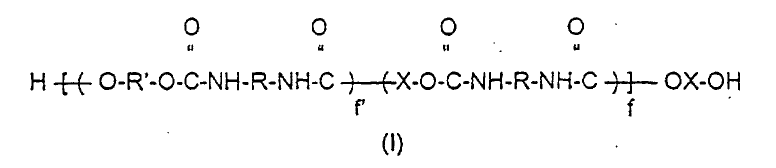 dans laquelle f est un nombre entier qui oscille entre 1 et 58; f' est un nombre entier qui oscille entre 0 et 58; R et R' sont identiques ou différents et désignent des groupes alkyle ou aryle et X a la formule II 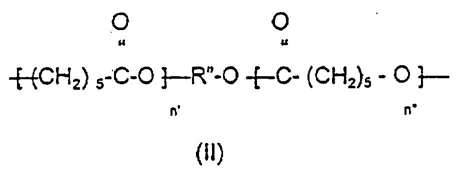 dans laquelle R" est un groupe alkyle ou aryle, et n' et n" sont des nombres entiers, dont la somme oscille entre 42 et 220.

2. Méthode pour la préparation d'un matériel thermoplastique de polyuréthane cristallin de formule générale I, 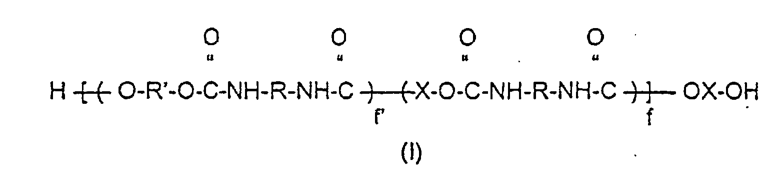 dans laquelle f est un nombre entier qui oscille entre 1 et 58; f' est un nombre entier qui oscille entre 0 et 58; R et R' sont identiques ou différents et désignent des groupes alkyle ou aryle et X a la formule II 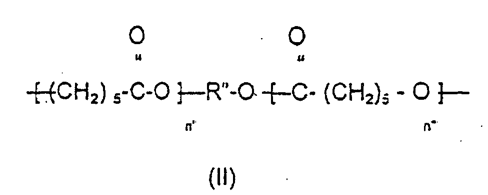 dans laquelle R" est un groupe alkyle ou aryle, et n' et n" sont des nombres entiers, dont la somme oscille entre 42 et 220, **caractérisée en ce qu'**elle comprend la réaction d'un polymère de polycaprolactone de formule IIa 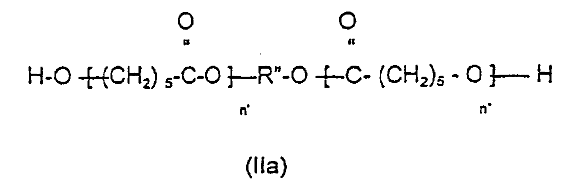 dans laquelle R", n' et n" ont les significations citées antérieurement dans le présent document, avec un diisocyanate de formule OCN-R-NCO, dans laquelle R et R' ont les significations citées antérieurement dans le présent document.

3. Méthode selon la revendication 2, **caractérisée en ce qu'**elle utilise un prolongateur de chaîne de formule HO-R'-OH dans ladite réaction entre le polymère de polycaprolactone de formule IIa et le-dit diisocyanate.

4. Méthode selon la revendication 3, **caractérisée en ce que** le-dit prolongateur est 1,4-butanediol.

5. Méthode selon au moins une des revendications 2 à 4, **caractérisée en ce que** le-dit diisocyanate est 4,4'-diisocyanate de diphénylméthane, 2,4- et 2,6-diisocyanate de toluène, 4,4'-diisocyanate de dicyclohexylméthane ou 3-isocyanométhyl-3,5,5-triméthylciclohexylisocyanate.

6. Méthode selon une des revendications 2 à 5, **caractérisée en ce que** la-dite réaction est réalisée en mélangeant des quantités équimolaires de diisocyanate avec le-dit prolongateur de chaîne et du-dit polymère de polycaprolactone de formule II, les-dits deux derniers composants étant présents dans un rapport molaire qui oscille entre 0/1 et 1/1 respectivement.

7. Méthode selon la revendication 6, **caractérisée en ce que** le mélange est continu, avec une vitesse de flux qui oscille entre 200 et 1200 kg/h du poids total du composant, et qui est réalisé dans une extrudeuse, à une température qui oscille entre 150 et 350ºC et avec un temps moyen de résidence qui oscille entre 45 secondes et 2,5 minutes.

8. Méthode selon une des revendications 2 à 7, **caractérisée en ce que** la-dite réaction est réalisée en présence d'un catalyseur basé sur un complexe métallique, approprié aux réactions avec de l'uréthane.

9. Méthode selon la revendication 8, **caractérisée en ce que** les-dits métaux sont l'étain et/ou le bismuth.

10. Méthode selon une des revendications 2 à 9, **caractérisée en ce que** le-dit polymère de polycaprolactone de formule IIa 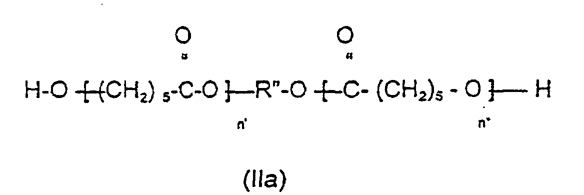 dans laquelle R", n' et n" ont les significations citées antérieurement dans le présent document, a un poids moléculaire qui oscille entre 5000 et 25000.
